(19) Europäisches Patentamt
European Patent Office
Office européen des brevets

(11) Publication number: 0 232 105 A2

# (12) EUROPEAN PATENT APPLICATION

(21) Application number: 87300668.8

(22) Date of filing: 27.01.87

(51) Int.Cl.[3]: G 01 N 27/26

(30) Priority: 27.01.86 US 222897

(43) Date of publication of application: 12.08.87 Bulletin 87/33

(84) Designated Contracting States: CH DE FR GB LI NL SE

(71) Applicant: CELTRON CORPORATION
957 Ball Avenue
Union New Jersey 07083(US)

(72) Inventor: Sheppard, Richard D.
31 Deerpath Drive
Flanders New Jersey 07836(US)

(74) Representative: Crawford, Andrew Birkby et al,
A.A. THORNTON & CO. Northumberland House 303-306
High Holborn
London WC1V 7LE(GB)

## (54) Continuous detection of radiolabeled signals in electrophoresis and methods therefor.

(57) An apparatus is disclosed for use in conducting electrophoresis. The apparatus comprises support means for supporting a matrix through which radiolabeled bands from a radiolabeled sample can migrate. The support means include passage means for directing the passage of radiolabeled signals emanating from the migrating radiolabeled bands through the support means. This occurs at a predetermined location on the support means and occurs without significant quenching of the radiolabeled signals while preventing the passage of liquids through the support means. The apparatus may contain a detection means associated with the passage means for the purpose of detecting radiolabeled signals.

EP 0 232 105 A2

Croydon Printing Company Ltd.

CONTINUOUS DETECTION OF RADIOLABELED SIGNALS IN ELECTROPHORESIS AND METHODS THEREFOR

FIELD OF INVENTION

This invention relates to the field of chemical analysis. More specifically, this invention relates to the field of electrophoresis.

BACKGROUND

Many chemicals, especially biochemicals, are composed of complicated polymeric arrays of simple monomeric units. Among the more well-known biochemicals which have this basic structure are proteins such as immunoglobulins, and nucleic acids. Frequently, important aspects of these chemicals can be determined by elucidating the monomeric sequence of these polymeric compounds. By determining the order of the monomeric units of, for instance, nucleic acid, it is possible to determine the content of the genetic information encoded by the monomers which comprise the polymeric nucleic acid. The determination of the order of monomeric units in a polymeric chemical is termed sequencing.

A common technique for the separation of chemicals, especially organic molecules and most especially biopolymers, is electrophoresis. Broadly speaking, electrophoresis involves the migration of a sample in a matrix in response to one or more electric fields. The matrix may be of homogeneous density and/or composition or it may be a gradient of increasing density and/or increasing buffer composition and/or variable pH. For example, electrophoresis can be conducted in a gel-like matrix, in a semi-solid matrix such as a block of starch, a solid matrix such as paper or in a completely liquid matrix such as a cylinder of buffer solution.

The sample to be electrophoresed is placed at one end of the matrix. Subsequently, the matrix is subjected to an electric field which field provides an energy source causing the samples to migrate through the matrix. When samples are migrating the matrix is said to be running.

As the sample migrates, the individual monomeric units are separated according to size. The smallest components migrate more quickly through the matrix while the larger components migrate more slowly. Because of this differential migration, the migrating components are separated from each other in space by the speed with which they move through the matrix. The resultant separate components are called electrophoretic bands or, simply, bands. Once separated, the bands are said to be resolved.

Electrophoresis is conducted in a unit termed an electrophoretic chamber. Such a chamber is comprised of a plurality of parts frequently made from glass in traditional electrophoretic chambers. These parts provide support for the matrix and, if planer, are called electrophoretic plates. For instance, in a non-solid matrix the matrix is poured between at least two such plates and allowed to solidify. Samples, frequently tagged with radiolabeled signals (so termed because they emit a radiation signal), are placed at one end of the matrix and migrate towards the other end.

In traditional electrophoresis of radiolabeled samples, following the migration of electrophoretic bands in the matrix, the matrix is removed from the electrophoretic chamber of which it is a part and X-ray like film is placed over the matrix. When the film is placed on top of the matrix, the radiolabeled bands emit a signal which exposes an area of the film in juxtaposition to each band. Subsequent photographic development of the film reveals a dark line segment corresponding to the position of the radiolabeled band. By appropriate analysis, which varies for the class of chemicals which are being electrophoresed, the sequence of the original starting polymeric sequence can be determined.

The latter portion of the electrophoretic sequencing process, involving the development of X-ray film, is termed autoradiography. Many of the limitations of electrophoretic sequencing derive from the autoradiography step. The nature of the autoradiography step is such that electrophoresis must be stopped so that no samples are running through the matrix. That is, the matrix is static because the matrix has been removed from the electrophoretic chamber and thus from the electric field which is the energy source responsible for movement of the sample. Additionally, many hours, sometimes as long as weeks, are required to expose the X-ray film so that the specific bands may be detected. The practical manifestations of these difficulties include the substantial time limitations of film exposing and the requirement for disassembly of the electrophoretic chamber to access the matrix.

The static nature of the autoradiography step additionally presents limitations respecting band resolution because larger components, which move much more slowly through the matrix, frequently are not resolved from each other or from the initial sample. This results in a jumble of indistinguishable components at the sample end of the matrix. For the sequencing of larger components, it is not uncommon to conduct a series of electrophoretic experiments to distinguish separate bands from the jumble. An alternative employed to reduce the total number of electrophoretic runs is the use of very long matrices which increase the time allowed for each run and, thereby, increase the opportunity for large fragment separation. However, this method still requires multiple electrophoretic runs and poses practical difficulties arising from the extremely fragile nature of the matrices.

The instant invention revolutionizes the concept of electrophoresis by providing a device and method for executing electrophoretic sequencing without the need for autoradiography. Moreover, this invention teaches an electrophoresis device and a method for conducting electrophoresis which may be used in a dynamic manner; that is, while the matrix is running and the bands are migrating. Consequently, the migration may continue to run until all components are resolved into electrophoretic bands. As a result, this invention does not require a dismantling of the electrophoretic chamber, eliminates much of the need for rerunning electrophoretic experiments to separate larger fragments, eliminates the need for long electrophoretic matrices to increase the spacing between bands and permits detection of migrating bands which are separated from each other by extremely small distances.

At least one prior reference, Beck and Pohl, 1984, DNA Sequencing With Direct Blotting Electrophoresis, EMBO.J., 3:2905, discloses an electrophoretic process involving movement. This process is a somewhat modified static electrophoretic system. In Beck, the migrating components are permitted to migrate off the matrix and come into contact with an immobilizing blotting matrix. The functional groups contained in the bands are bound to the blotting matrix which is moving in a conveyer belt like arrangement. The temporal order of elution from the electrophoretic matrix is, therefore, changed to a geometric order on the moving blotting membrane. Following the elution of the separated bands onto the immobilized matrix, the Beck technique still requires standard autoradiographic techniques to uncover the sequence of the nucleic acid sample.

It is believed this invention is the first electrophoretic device and method of sequencing which permits the detection of resolved, radiolabeled, electrophoretic bands during migration through a matrix.

SUMMARY OF THE INVENTION

An apparatus is disclosed for use in conducting electrophoresis. The apparatus comprises support means for supporting a matrix through which radiolabeled bands from a radiolabeled sample can migrate. The support means include passage means for directing the passage of radiolabeled signals emanating from the migrating radiolabeled bands through the support means. This occurs at a predetermined location on the support means and occurs without significant quenching of the radiolabeled signals while preventing the passage of liquids through the support means. The apparatus may contain a detection means mounted adjacent to or within the passage means for the purpose of detecting radiolabeled signals.

In one embodiment, the apparatus may comprise a scintillant material mounting means for mounting a scintillant adjacent to the passage means so as to produce a detectable signal corresponding to the radiolabeled signals. This apparatus additionally comprises an amplifier means for amplifying detectable signals. The amplifier means can be any means known in the art such as a photomultiplier means as exemplified by a photomultiplier tube. Detection in this embodiment may also occur with the use of a laser.

In another embodiment, the apparatus may have detection means which comprises solid state detector means for detecting the radiolabeled signals and producing an output corresponding to the signals. The solid state detector means may be any means capable of detecting the radiolabeled signal. However, preferred are semiconductor diode detector means or surface barrier detector means.

A method for continuous detection of radiolabeled signals in an electrophoretic field is disclosed. The method comprises supporting a matrix of sufficient length in an electrophoretic field so that radiolabeled bands from a radiolabeled sample can migrate through the matrix and be resolved while providing detectable radiolabeled signals emanating from the migrating radiolabeled bands. The method may include detecting the radiolabeled signals emanating from the migrating bands and may include detecting the signals in a manner not limited by the rate of bands migration.

This invention also discloses a method for continuous detection of radiolabeled signals in an electrophoretic field. The method comprises placing a radiolabeled sample which is to be electrophoresed onto a matrix of sufficient length for resolution of migrating electrophoretic bands from the sample. The matrix is supported by a plurality of supporting means which means permit the passage of radiolabeled signals while being impermeable to liquid. The method may further provide for detecting radiolabeled signals using a detection means placed closely proximate to the matrix wherein the detection means detects the radiolabeled signals emanating from the migrating electrophoretic bands.

BRIEF DESCRIPTION OF THE FIGURES

Figure 1 shows a pictorial representation of a device for the continuous detection of radiolabeled signals employing a solid state detection mechanism.

Figure 2 is a graphic representation of continuous band detection by the device of Figure 1.

Figure 3 shows a pictorial representation of a device for the continuous detection of radiolabeled signals employing a photomultiplier detection mechanism.

DETAILED DESCRIPTION

An apparatus is disclosed for use in conducting electrophoresis of any type including tube electrophoresis, horizontal electrophoresis and vertical electrophoresis. The apparatus comprises a support means for supporting a matrix through which radiolabeled bands from a radiolabeled sample can migrate. The support means includes passage means for directing the passage of radiolabeled signals emanating from the migrating bands through the support means at a predetermined location and without significant quenching of the radiolabeled signals while preventing the passage of liquids through the support means at the predetermined location. The apparatus may include a detection means associated with the passage means. The detection means may be mounted adjacent to the passage means or within the passage means for detecting the radiolabeled signals. If mounted adjacent, said detection means must be sufficiently proximate to the radiolabeled signal source to allow detection or said detection means can adjoin the passage means. This detection means may be capable of detecting said signals without being limited by the rate of migrating radiolabeled bands.

A variety of detection means can be used. One example of such means comprises scintillant material mounting means for mounting a scintillant material adjacent to or within the passage means so as to produce a detectable signal corresponding to the radiolabeled signals. This detection means oftentimes comprises amplifier means such as photomultiplier means as exemplified by a photomultiplier tube for the purposes of amplifying the detectable signal. Detection with this detection means can also be accomplished using a laser.

Another type of detection means which can be used comprises a solid state detector means for detecting the radiolabeled signals and producing an output corresponding to the signals. The solid state detector means may be any means sufficient to detect radiolabeled signals and produce a corresponding output. Preferably, the solid state detector means are semiconductor diode detector means or surface-barrier detector means. However, a wide variety of detector means would be acceptable including a germanium crystal detector, ion implanted detectors, totally depleted detectors, gas filled detectors, ionization chamber detectors, as well as the aforementioned semiconductor diode detectors and surface barrier detectors.

The means for supporting the matrix of this apparatus may comprise a plurality of electrophoretic plates. Oftentimes the passage means of these electrophoretic plates comprise an aperture extending through at least one of the electrophoretic plates and extending across the aperture a liquid impermeable means which does not significantly quench radiolabeled signals passing through the liquid impermeable means. The impermeable means can be comprised of a variety of materials such as glass, plastics, metals, resins or crystals. In a currently preferred embodiment the liquid impermeable means is Mylar®. The plurality of electrophoretic plates supporting means can be comprised of a variety of materials capable of supporting the matrix. Such materials include plastic, glass and acrylic resins such as Lucite®.

The passage means of the electrophoretic apparatus may further comprise a barrier means. The barrier means may include a material of sufficient density to block radiolabeled signals and include a resolution window at a location corresponding to the predetermined location of the apparatus for permitting the passage of radiolabeled signals therethrough.

This apparatus, as with all other apparatuses discussed herein, may include a detection means mounted adjacent to the passage means or within the passage means for detecting radiolabeled signals. In one instance where the passage means of the apparatus comprises barrier means, the detection apparatus may include scintillant material mounting means for mounting a scintillant adjacent to the passage means so as to produce a detectable signal corresponding to the radiolabeled signals. In another instance, it is also possible to have a detection means for the instant apparatus whereby the passage means includes a barrier means and whereby the detection means comprises solid state detector means for detecting the radiolabeled signals and producing an output corresponding to said signals.

In apparatuses of the type described having barrier means, the passage may comprise an aperture and liquid impermeable means extending across the aperture which liquid impermeable means do not significantly quench radiolabeled signals. A wide range of materials is envisioned for the barrier means including metal such as steel. The resolution window component of the barrier means may be in a variety of sizes so long as the window permits the passage of radiolabeled signals emanating from migrating bands without destroying the resolution of the resolved migrating bands. The resolution window size is preferably not greater than eight millimeters and even more preferably not greater than one millimeter. Generally, any embodiment of the apparatus may include a recording means for recording the output of any detection means.

The matrix contained in the apparatus of this invention may be of any type sufficient to the manufacture so that the matrix is capable of withstanding an electrophoretic field of sufficient intensity to cause radiolabeled samples to migrate through the matrix resolving electrophoretic bands. Gels, matrices, such as polacrylamide or agarose, regardless of their denaturing or non-denaturing qualities, are satisfactory. Any radiolabel emitting signal is appropriate, but most desired are radiolabeled signals which emit beta radiation such as found from $^{32}P$, $^{14}C$, $^{3}H$ or $^{35}S$.

A method for the continuous detection of radiolabeled signals in an electrophoretic field is also disclosed by this invention. The method comprises supporting in an electrophoretic field a matrix of sufficient length so that radiolabeled bands from a radiolabeled sample can migrate through the matrix and be resolved. The method provides for detecting radiolabeled signals emanating from radiolabeled bands migrating through the matrix. The method may include detecting the radiolabeled signals using a detection mechanism. The detection mechanism may, among other components, include a photomultiplier, a laser or a solid state detector such as a semiconductor diode detector or a surface barrier detector as well as any other acceptable detector. In addition, the detecting of the radiolabeled bands need not be limited by the rate of band migration.

The method described may support the matrix in a manner comprising mounting the matrix between a pair of electrophoretic plates. This method may further include passing the detectable radiolabeled signals through a predetermined area of at least one of the electrophoretic plates in such a manner as to prevent any liquid in the matrix from passing through at least one of the electrophoretic plates. When passing the radiolabeled signals through a predetermined area, the radiolabeled signals surrounding the predetermined area of at least one electrophoretic plate may be blocked. When using the method together with detecting, the detecting may include mounting a scintillant material adjacent to the predetermined location. Moreover, in addition to the scintillant material it is possible to add the step of amplifying the radiolabeled signals.

PREFERRED EMBODIMENT

In a currently preferred embodiment of this invention a device for the continuous detection of radiolabeled signals in an electrophoretic field was used. The sample electrophoresed was pBR322 DNA digested with restriction enzymes Hinf-I. The DNA was labeled with gamma ATP-$^{32}$P using direct phosphorylation. DNA was maintained in tris-borate buffer.

The device, shown in Figure 1, comprises electrophoretic plates made of Lucite® approximately 1/4 inch thick, 7 inches high and 7 1/4 inches wide. One of the electrophoretic plates has an aperture at a location towards the bottom of the plate to ensure proper band resolution. The aperture has dimensions comprising eight millimeters on its longitudinal axis and one millimeter on its latitudinal axis. It is understood, however, that any aperture dimension is appropriate so long as it is large enough to permit radiolabeled signals to pass therethrough. Spanning the matrix side of the aperture containing plate is a sheet of Mylar® about 0.0019 inch thick. Although Mylar® need not run the entire length of the plate, this is done to ensure a matrix of uniform and smooth surface and to allow for uniform movement of the bands without distortion. A material other than Mylar® would be satisfactory so long as it was liquid impermeable and did not significantly quench the radiolabeled signals which pass through it. It is understood that it is the ideal to minimize or eliminate any alternation or distortion of migrating bands. Adjacent to the Mylar® is a one millimeter thick barrier made of steel to block radiolabeled signals. The barrier covers the entire aperture except for a one by eight millimeter resolution window which permitted passage of the radiolabeled signals subsequent to passage of the signals through the Mylar® material.

The matrix was comprised of acrylamide gel of sufficient length for resolution of migrating bands from electrophoresed samples. This length may vary but is most preferably about 14-45 centimeters. The matrix was 10% acrylamide with a ratio of acrylamide to methylene bisacrylamide of 80:1. The acrylamide concentration can be any concentration sufficient to promote the maximum number of resolved bands in the shortest period of time. The matrix further comprised various concentrations of buffers and the like to ensure proper migration and stability of the electrophoresed samples. In this preferred embodiment, the various additions to the matrix included a Tris/Glycine buffer system. Power to run the gel was supplied by a Model 1500 494 Electrophoresis Power Supply. Voltage was sufficient to ensure proper band migration for three hours at ambient temperature.

Radiolabeled signals were detected by a surface-barrier detecting solid state detector from the Ortec Division of EG&G. Of course, other detection means such as semiconductor diode means are also appropriate. A negative electrical voltage was applied to the detector which resulted in the creation of an enhanced depletion region within the detector. Said detector quickly and efficiently collects the charged carrier produced by radioactive beta particles impacting the surface barrier detector. The resulting impulse is fed into a charge sensitive pre-amplifier. The pre-amplifier accepts this signal, magnifies it and feeds it into the amplifier which boosts the signal still further. The now amplified signal may be read or recorded by a variety of reading or recording means. For instance, an oscilliscope can be used to visualize the amplified signal. This is especially advantageous as a quick check to ensure proper apparatus function. In another instance, a counter such as a Model 1950A Digital Counter by John Fluke Mfg. Co. may be used to detect the signal. The final results may be recorded by any mechanism extant in the art such as a computer typed report or a strip chart recorder. The tabulation of the results from the pBR322 DNA sample is graphically shown in Figure 2. These results are in direct correlation with control experiments using traditional electrophoresis employing autoradiography.

In another preferred embodiment, an alternative approach to the detection mechanism was employed. This detection mechanism exploits the Cherenkov phenomenon. In this approach, pictorially shown in Figure 3, the barrier is a steel plate. The plate has approximately a one by eight millimeter slit that defines the resolution window. Covering the barrier and the resolution window is a scintillant mounting means defined by an upper and lower glass cover slip. These cover slips define an inner reservoir approximately 1/32 of an inch in diameter. The reservoir was filled with the scintillant toluene to a total amount of approximately 0.3 ml. It will be understood that any other scintillant such as Econoflor® would be acceptable. Atop the mounting means was placed a photomultiplier tube to indirectly detect the radiolabeled signals after passing through the scintillant and scintillant mounting means. Of course, other light detection means such as laser means would be equally appropriate in this detection scheme. As described for the alternative embodiment above discussed, the signal is passed to a pre-amplifier, amplifier and recorded by a recording means.

What is claimed is:

1. Apparatus for use in conducting electrophoresis comprising support means for supporting a matrix through which radiolabeled bands from a radiolabeled sample can migrate, said support means including passage means for directing the passage of radiolabeled signals emanating from said migrating radiolabeled bands through said support means without significant quenching while preventing the passage of liquids through said support means at said pre-determined location, said passage means including barrier means comprising a material of sufficient density to block said radiolabeled signals and including a resolution window at a location corresponding to said predetermined location for permitting the passage of said radiolabeled signals therethrough, and detection means associated with said passage means for directly detecting said radiolabeled signals.

2. The apparatus of Claim 1 including detection means mounted adjacent to said passage means for detecting said radiolabeled signals.

3. The apparatus of Claim 1 including recording means for recording the output from said detection means.

4. The apparatus of Claim 1 wherein said detection means is not limited by the rate of migration of said radiolabeled bands.

5. The apparatus of Claim 1 wherein said detection means comprises amplifier means for amplifying said detectable signal.

6. The apparatus of Claim 1 wherein said detection means includes a laser.

7. The apparatus of Claim 1 wherein said detection means comprises solid state detector means for detecting said radiolabeled signals and producing an output corresponding thereto.

8. The apparatus of Claim 1 including passage means comprising an aperture and liquid impermeable means extending across said aperture.

9. The apparatus of Claim 1 wherein said barrier means comprises metal.

10. The apparatus of Claim 1 wherein said barrier means comprises copper.

11. The apparatus of Claim 1 wherein said resolution window has a longitudinal axis approximately corresponding to the electrophoretic matrix width.

12. The apparatus of Claim 1 wherein said resolution window has a longitudinal axis substantially corresponding to the detector width.

13. The apparatus of Claim 1 wherein said resolution window has a longitudinal axis of not greater than eight millimeters.

14. The apparatus of Claim 1 wherein said resolution window has a latitudinal axis of not greater than one millimeter.

15. The apparatus of Claim 1 wherein said matrix is a gel.

16. The apparatus of Claim 15 wherein said gel is selected from the group consisting of polyacrylamide and agarose.

17. The radiolabeled signals of Claim 1 wherein said signals are derived from beta emitted radiation.

18. The radiolabeled signals of Claim 17 wherein said beta emitted radiation is selected from the group consisting of $^{32}P$, $^{14}C$, $^{3}H$, and $^{35}S$.

19. The apparatus of Claim 1 including detection means mounted within said passage means for detecting said radiolabeled bands.

20. A method for continuous detection of radiolabeled signals in an electrophoretic field comprising:

supporting a matrix of sufficient length in an electrophoretic field so that radiolabeled bands from a radiolabeled sample can migrate through said matrix and be resolved;

providing detectable radiolabeled signals emanating from said migrating radiolabeled bands;

selectively blocking said radiolabeled signals in a predetermined areas while permitting certain of said radiolabeled signals to pass through a resolution window; and

directly detecting said radiolabeled signals emanating from said radiolabeled bands.

21. The method of Claim 20 wherein said detecting is not limited by the rate of said band migration.

22. The method of Claim 20 wherein said detecting of said radiolabeled signals includes a solid state detector.

23. The method of Claim 20 where said supporting of said matrix comprises mounting said matrix between a pair of electrophoretic plates.

24. The method of Claim 20 including passing said detectable radiolabeled signals through a predetermined area of at least one of said pair of electrophoretic plates while preventing any liquid in said matrix from passing through said at least one electrophoretic plate.

Fig. 1

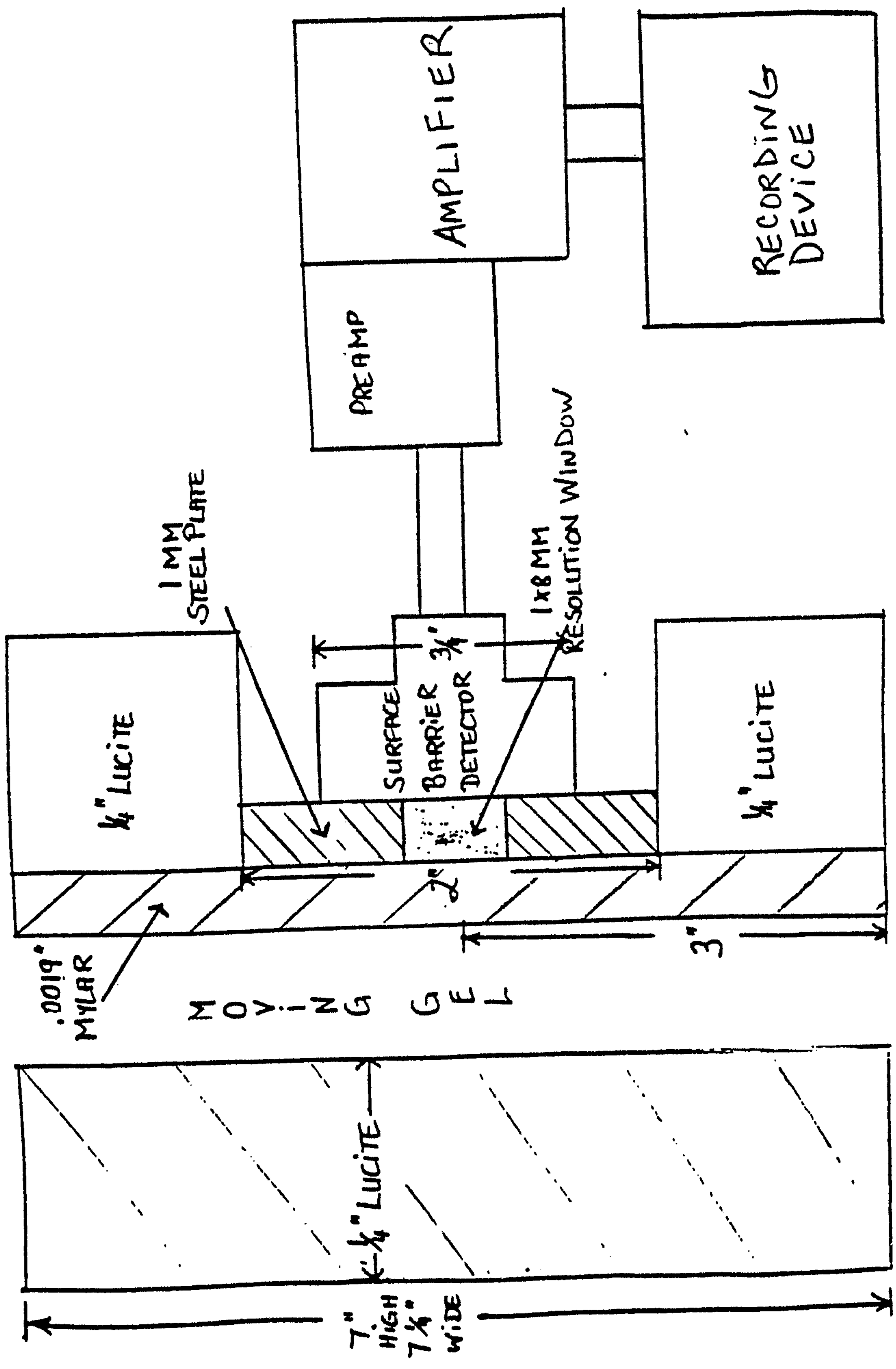
AMPLIFIER
RECORDING DEVICE
PREAMP
1 MM STEEL PLATE
1x8MM RESOLUTION WINDOW
3/4"
SURFACE BARRIER DETECTOR
1/4" LUCITE
1/4" LUCITE
2"
3"
.0019" MYLAR
MOVING GEL
1/4" LUCITE
7" HIGH 7 1/2" WIDE

Fig. 2

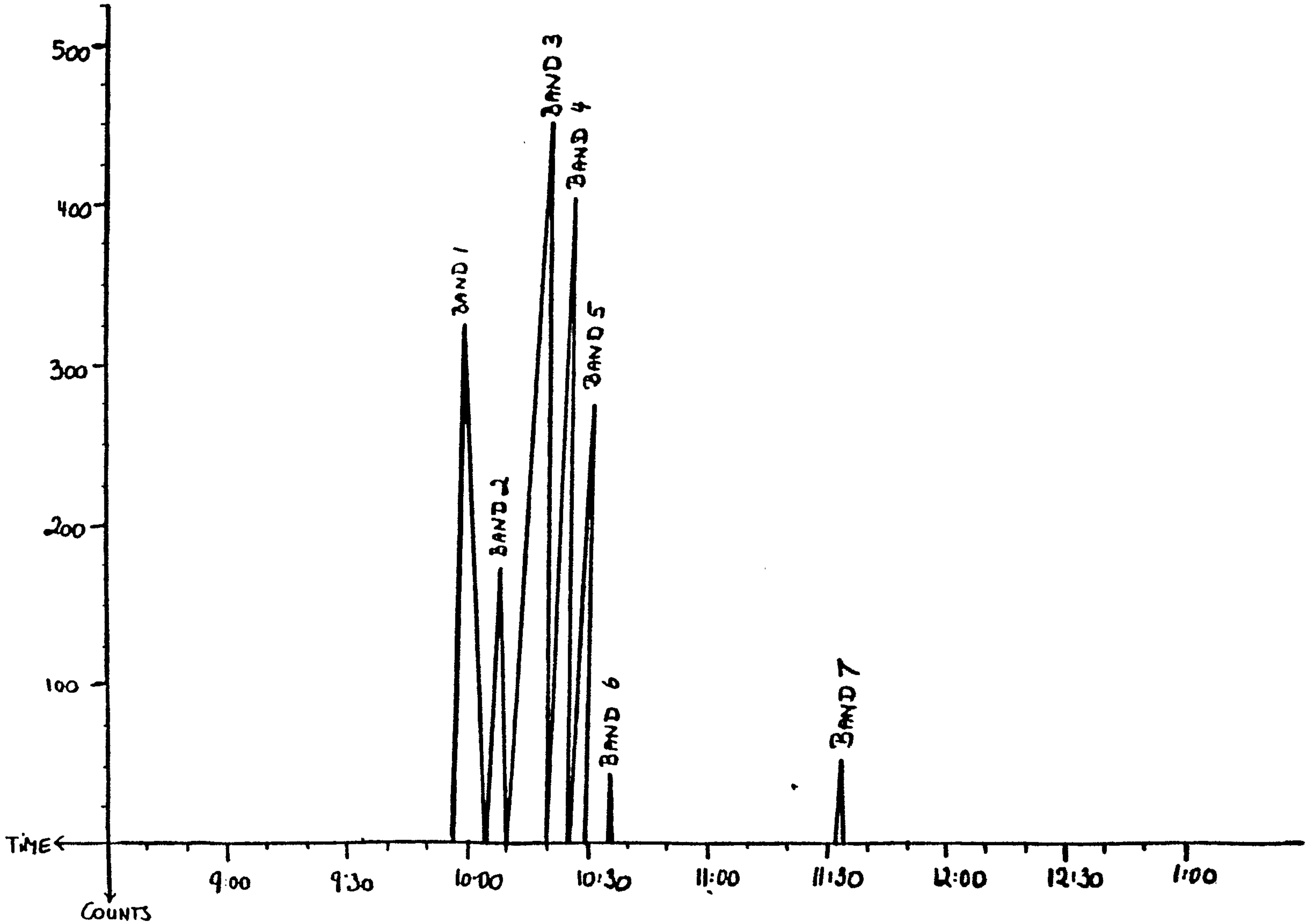


Band #1 - .52mm/min - 1.04mm wide
Band #2 - .45mm/min - 3.15mm wide
Band #3 - .39mm/min - 0.195mm wide
Band #4 - .32mm/min - 0.160mm wide
Band #5 - .20mm/min - 0.1mm wide
Band #6 - .16mm/min - 0.05mm wide

FIG. 3

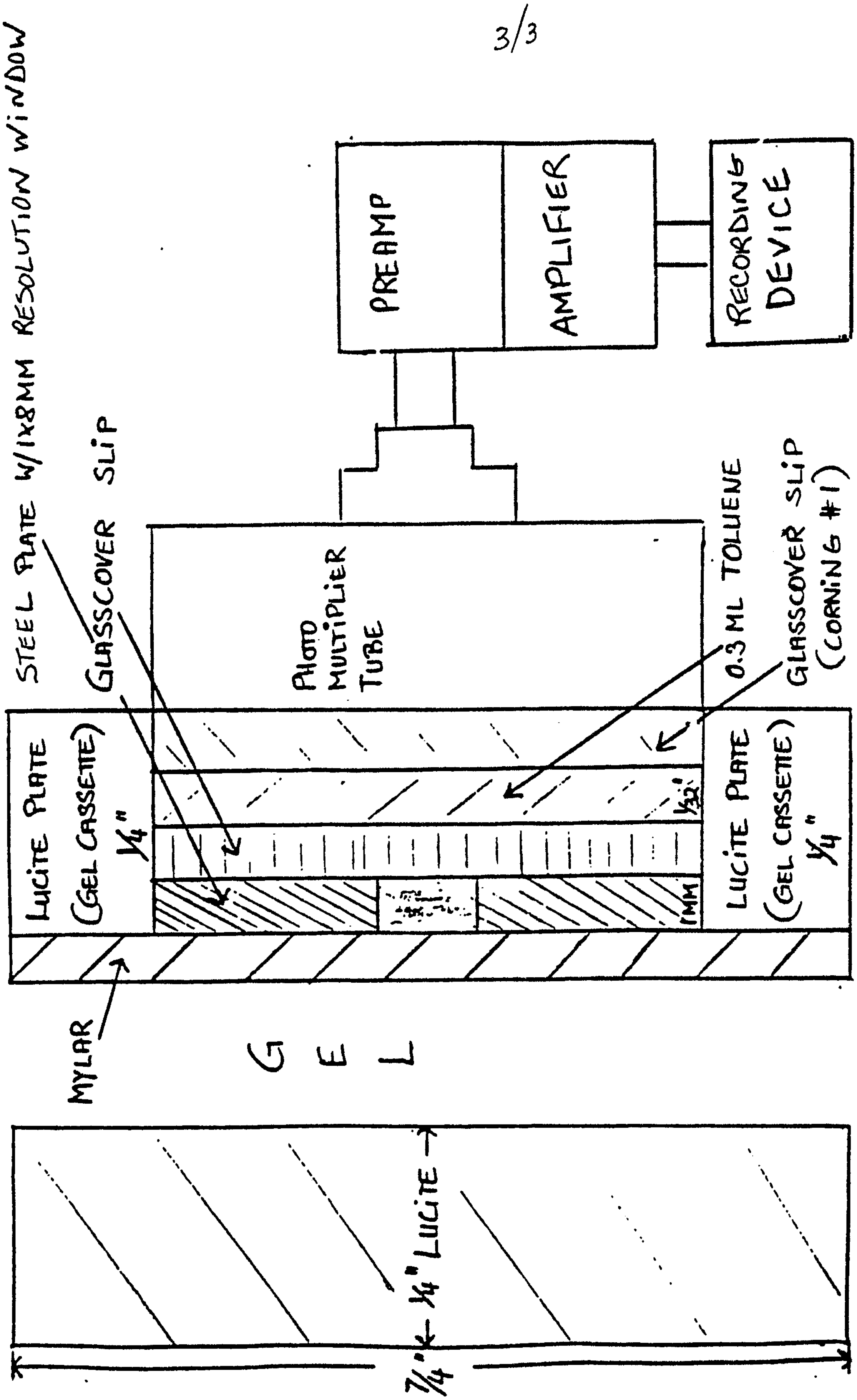
STEEL PLATE W/1x8MM RESOLUTION WINDOW
GLASSCOVER SLIP
PREAMP
AMPLIFIER
RECORDING DEVICE
PHOTO MULTIPLIER TUBE
0.3 ML TOLUENE
GLASSCOVER SLIP (CORNING #1)
LUCITE PLATE (GEL CASSETTE) 1/4"
LUCITE PLATE (GEL CASSETTE) 1/4"
1/32"
1MM
MYLAR
GEL
1/4" LUCITE
7/4"